# EUROPÄISCHE PATENTSCHRIFT

(11) **EP 2 025 419 B1**
(45) Veröffentlichungstag und Bekanntmachung des Hinweises auf die Patenterteilung: **07.09.2011**
(21) Anmeldenummer: 07014268.2
(22) Anmeldetag: 20.07.2007
(51) Int. Cl.: B08B 3/08, C09D 9/00, C11D 3/20, C11D 3/43, C23G 5/032, C23G 5/04

(54) **Verfahren und Vorrichtung zum Entlacken von Bauteilen**
Process and device for the removal of coatings from parts
Procédé et dispositif pour le décapage d'articles

(43) Veröffentlichungstag der Anmeldung: 18.02.2009
(73) Patentinhaber: Fourné, Renate, 53127 Bonn (DE)
(72) Erfinder: Fourné, Renate, 53127 Bonn (DE); De Cuyper, Danny Maria E., 2630 Aastselaar (BE); Tilley, Yannick Robert, 9140 Temse (BE)
(74) Vertreter: Wagner, Matthias

(56) Entgegenhaltungen:
- WO-A-00/69576
- DE-A1- 10 258 490
- US-A- 3 954 648
- US-B1- 6 855 210

## Beschreibung

Die Erfindung betrifft ein Verfahren zum Entlacken von oberflächlich lackierten oder beschichteten Bauteilen durch Benetzen der Bauteile mit einem Lösungsmittel aus reinem Triethylenglykol über eine vorbestimmte Einwirkdauer.

Durch Entlacken oberflächlich lackierter oder beschichteter Bauteile wird die oberflächlich auf das Bauteil aufgebrachte Lackschicht oder Beschichtung möglichst vollständig entfernt, wie es beispielsweise bei der Weiterverarbeitung fehlerhaft lackierter Bauteile gewünscht ist. Kommt es nämlich bei der Lackierung von Bauteilen zu Fehlern in der Lackierung, können die Bauteile aufgrund der Lackschicht nicht ohne Weiteres wieder verwendet werden, beispielsweise erneut lackiert werden, sondern es wird ein Verfahren benötigt, mit welchem sich die fehlerhafte Lackschicht zuvor möglichst rückstandslos wieder entfernen lässt, bevor das Bauteil einer erneuten Bearbeitung oder auch erneuten Lackierung zugeführt wird.

Es ist bereits bekannt, Teile mit fehlerhafter Lackierung oder Beschichtung im so genannten Wirbelbett-Reinigungsverfahren unter Zuhilfenahme von kleinen Partikeln und hohen Temperaturen von über 400°C zu entlacken oder aber die Lackschicht oder Beschichtung mittels hochkonzentrierter Laugen oder Säuren zu entfernen. Neben Umweltaspekten tritt bei den bekannten Verfahren das Problem auf, dass die Oberfläche der Teile mehr oder weniger stark angegriffen wird, was zu Qualitätsverlusten der Bauteile führt.

Ein Beispiel sind im Zink-Druckgussverfahren hergestellte Karosserien von Spielzeugautos, die mit feinen Vertiefungen und Rillen an der Oberfläche versehen sind, um beispielsweise den Fugenverlauf an Türen nachzubilden. Derartige feine Oberflächenprofilierungen gehen bei einer Entlackung einer fehlerhaft lackierten Spielzeugautokarosserie nach den bekannten Verfahren sehr leicht verloren, so dass das Bauteil wertlos wird.

Aus der GB 285887-A ist es bekannt. Lackschichten von metallischen Werkstücken u.a. durch Einsatz von Lösungsmitteln auf Basis von Triethylenglykol zu entfernen. Die Entlackungswirkung des eingesetzten Lösungsmittels lässt jedoch zu wünschen übrig und benötigt eine relativ lange Einwirkdauer, die einer rationellen und schnellen Entlackung von Bauteilen mit hoher Geschwindigkeit im Wege steht. Darüber hinaus muss nach Abschluss der Einwirkdauer das Lösungsmittel und der gelöste Lack aufwendig, z.B. durch Abwischen vom Bauteil entfernt werden, was wiederum zusätzlichen Aufwand und zeitliche Verzögerungen mit sich bringt.

Aus der US 3 954 648 ist ein Verfahren zum Entfernen von Lackschichten von metallischen Oberflächen bekannt, wobei das Lösungsmittel ein Gemisch aus mindestens einem organischen Lösungsmittel, einem Alkalimetallhdroxid und einem Netzmittel ist. Neben max. 60% Triethylenglycol ist stets noch mindestens ein weiterer Stoff im Lösungsmittel enthalten. Die exakte chemische Zusammensetzung des Lösungsmittels beeinflusst das Ablösungsergebnis hierbei maßgeblich. Ebenfalls wird das Lösungsmittel auf eine gegenüber der Umgebungstemperatur erhöhte Temperatur erwärmt. Diese Lösungsmitteltemperatur wird jedoch durch die Siedetemperatur des Bestandteils mit der geringsten Siedetemperatur bestimmt und schränkt den Temperaturbereich, gegenüber der Anwendung von reinem Triethylenglycol nach oben ein.

In der WO 00/69576 ist ein Verfahren zur Entfernung einer Polymerschicht von einem Trägerbauteil offenbart, wobei das Lösungsmittel auf der Basis von Triethylenglycol in einem ersten Behälter erhitzt wird. Das zu entlackende Bauteil befindet sich unter Überdruck in einen geschlossenen Reaktor und wird zusätzlich zunächst mit einem Gas vorbehandelt. Das erhitzte Lösungsmittel wird in den Reaktor geleitet und wirkt während einer vorbestimmten Zeit auf das Bauteil ein. Abschließend wird das Lösungsmittel in den ersten Behälter zurückgepumpt und das Bauteil und der Reaktor mit Wasser gespült. Dieses Verfahren erfordert einen komplexen Aufbau für die Zuführung des Gases, für die Einleitung und das Abpumpen des Lösungsmittels sowie für den Spülvorgang.

Aus der US 686 5210 B1 ist ein Verfahren bekannt, bei dem sich ein zu entlackendes Bauteil in einem auf max. 162°C erwärmten Lösungsmittelbad, das Triethylenglycol enthält, verbleibt bis der Lack entfernt oder angelöst ist und ferner durch Spülen vollständig entfernt werden kann. Auch hier ist mit dem Spülvorgang ein zusätzlicher Prozess erforderlich.

Aufgabe der vorliegenden Erfindung ist es daher, ein Verfahren zum Entlacken von oberflächlich lackierten oder beschichteten Bauteilen durch Benetzen der Bauteile mit einem Lösungsmittel aus reinem Triethylenglykol über eine vorbestimmte Einwirkdauer vorzuschlagen, welches sich durch besonders effektive Entlackungswirkung in möglichst kurzer Einwirkdauer auszeichnet, so dass eine Vielzahl zu entlackenden Bauteilen in kürzester Zeit auf rationelle Weise von ihrem Lackauftrag bzw. ihrer Beschichtung befreit werden können.

Sofern im Rahmen der weiteren Beschreibung von einer Lackschicht bzw. deren Entfernung gesprochen wird, gelten diese Ausführungen in gleicher Weise auch für andere mittels Triethylenglykol entfernbare Beschichtungen.

Zur Lösung der gestellten Aufgabe wird erfindungsgemäß vorgeschlagen, das Lösungsmittel auf eine Temperatur von 180 bis 295°C zu temperieren.

Im Rahmen der Erfindung wurde überraschend gefunden, dass sich die Entlackungswirkung des eingesetzten Lösungsmittels aus reinem Triethylenglykol extrem verbessern lässt und gleichzeitig die Einwirkdauer erheblich verringern lässt, wenn das Lösungsmittel auf eine hohe Temperatur von mindestens 150°C bis maximal der Siedetemperatur erhitzt wird und die zu entlackenden Bauteile mit diesem erhitzten Lösungsmittel an ihren lackierten Oberflächen benetzt werden.

Darüber hinaus bewirkt die hohe Temperatur des eingesetzten Lösungsmittels im Rahmen der Erfindung, dass bei Abschluss des Entlackungsvorganges die auf der Oberfläche des entlackten Bauteiles noch befindlichen Reste des Lösungsmittels innerhalb kürzester Zeit vollständig verdampfen, so dass die entlackten Bauteile selbsttätig abtrocknen und insbesondere eine Nachbearbeitung in Form eines Abwischens der Oberflächen beim erfindungsgemäßen Verfahren entfallen kann und die für das Entlacken von Bauteilen erforderliche Bearbeitungsdauer weiter reduziert wird.

Die im. Rahmen des erfindungsgemäßen Verfahrens für das Lösungsmittel aus reinem Triethylenglykol gewählte Temperatur richtet sich nach der Temperaturfestigkeit der zu entlackenden Bauteile, der Art der zu entlackenden Lackschicht und der Siedetemperatur des eingesetzten Lösungsmittels.

Als Lösungsmittel wird reines Triethylenglykol eingesetzt, dessen Siedepunkt knapp unter 300°C liegt. Insoweit wird das Lösungsmittel auf eine Temperatur von 180 bis 295°C temperiert.

Mit dem erfindungsgemäßen Verfahren ist es möglich, oberflächlich lackierte Bauteile während einer sehr kurzen Einwirkdauer vollständig von ihrer Lackschicht zu befreien, wobei die Einwirkdauer üblicherweise höchstens 5 Minuten beträgt, in bestimmten Anwendungsfällen sogar deutlich weniger, beispielsweise sogar nur wenige Sekunden, was nachfolgend anhand von Beispielen noch näher erläutert wird.

Das erfindungsgemäße Verfahren eignet sich insbesondere für die Entlackung von metallischen und nicht eisenhaltigen Werkstoffen, vorzugsweise niedrig schmelzenden Metallen wie Aluminium, Kupfer, Zink etc., wobei die Oberflächen derselben durch die Entlackung nicht angegriffen oder beschädigt werden.

Die Einwirkdauer richtet sich jedoch auch nach der Größe der zu entlackenden Teile. Bei kleinen Teilen beträgt die Einwirkdauer mehrere, insbesondere bis zu 5 Minuten. Bei größerem Beladegewicht durch zu entlackende Bauteile bzw. großen zu entlackenden Oberflächen kann die Einwirkdauer jedoch auch bis zu 60 oder 90 Minuten dauern. Die optimale Einwirkdauer kann vom Fachmann einfach z.B. auf empirische Weise ermittelt werden.

Gemäß einem Vorschlag des erfindungsgemäßen Verfahrens werden die Bauteile über die Einwirkdauer in ein Bad des Lösemittels eingetaucht, wozu sie beispielsweise in einem Beladekorb angeordnet und gemeinsam mit diesem in das Bad eingetaucht werden können. Die Entlackungswirkung lässt sich dadurch steigern, dass die Bauteile während der Einwirkdauer im Bad leicht bewegt werden, um die Umspülung mit dem Lösungsmittel zu verbessern.

Insbesondere bei sehr großformatigen Bauteilen kann gemäß einem alternativen Vorschlag der Erfindung auch vorgesehen sein, die Bauteile über die Einwirkdauer mit dem Lösungsmittel zu besprühen, um die Benetzung der oberflächlich lackierten Bauteile mit dem Lösungsmittel sicherzustellen.

Nachfolgend ist eine Vorrichtung zur Durchführung des erfindungsgemäßen Verfahrens beschrieben, die eine möglichst schnelle, umweltverträgliche und effektive Entlackung von oberflächlich lackierten Bauteilen sicherstellen soll.

Es kann ein mit dem Lösungsmittel befüllbarer Reinigungskessel verwendet werden, der mit einer Heizeinrichtung zum Temperieren des Lösungsmittels auf die gewünschte Temperatur zwischen 180 und 295°C ausgestattet ist und eine verschließbare Beladeöffnung aufweist, über die die zu entlackenden Bauteile in das im Reinigungskessel befindliche Lösungsmittel eingetaucht bzw. aus diesem wieder entfernt werden können. Hierzu kann mindestens ein über die Beladeöffnung in den Reinigungskessel eintauchbarer Beladekorb vorgesehen sein, welcher die zu entlackenden Bauteile aufnimmt. Da bei einem Wechsel der mit zu entlackenden Bauteilen befüllten Beladekörbe über die Beladeöffnung aufgrund der hohen Temperatur des Lösungsmittels Dämpfe aus dem Reinigungskessel entweichen können, wird ferner eine oberhalb der Beladeöffnung angeordnete Absaugeinrichtung für die aus dem Reinigungskessel austretenden Dämpfe vorgeschlagen, um die Dämpfe an einem unkontrollierten Austritt in die Umgebung und einer etwaigen gesundheitsschädigenden Wirkung für Bedienpersonal der Vorrichtung abzuhalten.

Die Beladeöffnung kann oberseitig auf dem Reinigungskessel vorgesehen sein, wobei in diesem Falle die Absaugeinrichtung eine die Beladeöffnung umgebende und mit einer Zugriffsöffnung für den Beladekorb ausgebildete Absaughaube sowie einen mit der Absaughaube kommunizierenden Ventilator umfasst. Auf diese Weise ist es möglich, eine Vielzahl von in den Beladekörben angeordneten oberflächlich lackierten Bauteilen während der im Rahmen der Erfindung notwendigen kurzen Einwirkdauer in dem Reinigungskessel zu platzieren, anschließend zu entnehmen und einen weiteren mit zu entlackenden Bauteilen befüllten Beladekorb in den Reinigungskessel einzubringen. Insoweit erzielt die Vorrichtung eine hohe Durchsatzleistung.

Des Weiteren kann zwischen der Absaughaube und dem Ventilator ein Kondensator vorgesehen sein, um etwaige in der abgesaugten Luftmenge enthaltene Lösungsmittelgehalte vor dem Eintritt in den Ventilator auszukondensieren und ggf. zurück zu gewinnen.

Die Erfindung wird nachfolgend anhand eines Ausführungsbeispieles in der Zeichnung näher erläutert.

Die einzige Figur zeigt in der Seitenansicht schematisch eine Vorrichtung zum Entlacken von oberflächlich lackierten Bauteilen, umfassend einen Reinigungskessel 1 sowie eine Absaugeinrichtung, bestehend aus einer auf dem Reinigungskessel 1 platzierten Absaughaube 4 mit nachgeordnetem Kondensator 5 und Ventilator 6 zum Absaugen von Dämpfen aus dem Innenraum der Absaughaube 4, die über Rohrleitungen 40, 50 miteinander kommunizieren und wobei der Ventilator 6 die angesaugte Luftmenge über ein Abluftrohr 60 abführt.

Die zu entlackenden Bauteile, beispielsweise Karosserien von Spielzeugautos werden in Beladekörben 2 angeordnet, wobei zur Steigerung der Durchsatzleistung mehrere, hier beispielsweise zwei derartige Beladekörbe 2 vorgesehen sind, die jeweils wechselweise in Benutzung sind.

Die Beladekörbe weisen einen Henkel 20 auf, an dem sie ergriffen und beispielsweise von Hand oder mittels eines nicht näher dargestellten Hebezeuges bewegt und zur Durchführung der Entlackung in den Reinigungskessel 1 eingeführt bzw. aus diesem wieder entnommen werden.

Zu diesem Zweck weist der Reinigungskessel 1 einen Kesselraum von beispielsweise 28 bis 340 I Kesselvolumen auf und wird mit einem Lösungsmittel, vorzugsweise reinem Triethylenglykol befüllt. Der Reinigungskessel 1 verfügt über eine nicht näher dargestellte Heizeinrichtung, so dass das im Innern des Reinigungskessels 1 befindliche Triethylenglykol auf eine vorbestimmbare Temperatur von vorzugsweise 180 bis 285°C temperiert werden kann. Man erkennt ferner Anschlussleitungen 10 zum Anschluss von Kühlwasser sowie ein Ablassventil 3, über welches das im Innern des Reinigungskessels 1 befindliche Lösungsmittel wieder abgelassen werden kann.

An der Oberseite ist der Reinigungskessel 1 mit einer verschließbaren Beladeöffnung 7 versehen, die je nach Größe von Hand oder z.B. mittels pneumatischer Antriebe betätigbar ist und im geöffneten Zustand das Einführen in bzw. Herausnehmen eines Beladekorbes 2 mit den zu entlackenden Bauteilen in bzw. aus dem Reinigungskessel 1 und das darin befindliche Lösungsmittel ermöglicht.

Die auf dem Reinigungskessel 1 oberseitig aufgesetzte Absaughaube 4 ist an einer ihrer Seiten mit einer Zugriffsöffnung 41 ausgestattet, so dass die Beladekörbe 2 in den von der Absaughaube 4 umgrenzten Raum eingebracht bzw. entnommen werden können und kommuniziert in der bereits geschilderten Weise über ein oberseitig angebrachtes Verbindungsrohr 40 über einen Kondensator 5 und eine weitere Verbindungsleitung 50 mit einem Ventilator 6, der etwaige bei geöffneter Beladeöffnung 7 austretende Lösungsmitteldämpfe zuverlässig absaugt, wobei diese sodann im Kondensator 5 auskondensiert und ggf. zurückgewonnen werden können. Als Kondensator 5 kann beispielsweise ein wassergekühlter Röhrenkondensator Verwendung finden, während der Ventilator 6 vorzugsweise in explosionsgeschützter Ausführung Verwendung findet.

Zur Steigerung der Entlackungswirkung und zur Verkürzung der Einwirkdauer kann der Beladekorb 2 innerhalb des Reinigungskessels 1 so gehaltert werden, dass er eine leichte Bewegung erfährt, so dass die Umspülung der Bauteile mit dem Lösungsmittel gefördert wird.

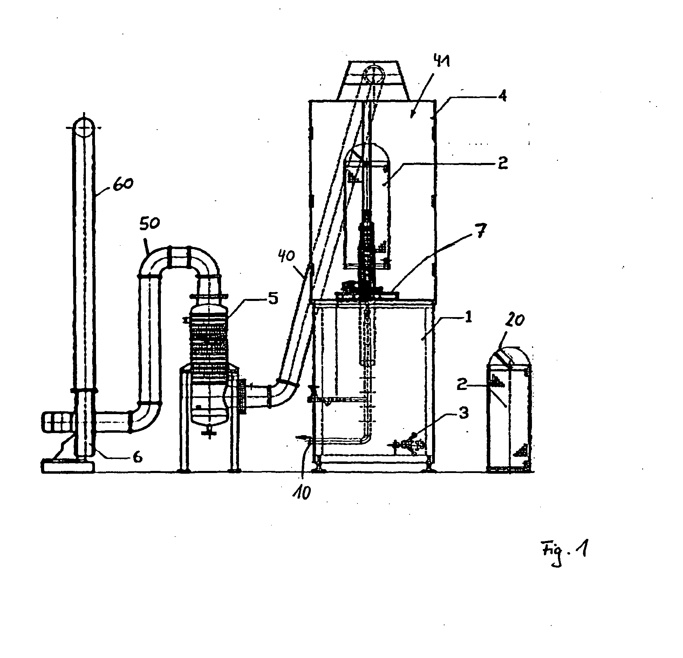

Mit einer derartigen aus der Figur 1 ersichtlichen und vorangehend erläuterten Vorrichtung wurden mehrere Versuche zur Entlackung von Bauteilen durchgeführt, die nachfolgend dargestellt werden:

### Versuchsbeispiel 1:

Es wurden Spielzeugauto-Karosserien einer Abmessung von ca. 60 x 30 x 30 mm und einem Gewicht von ca. 30 g pro Stück aus Zink-Druckguss, die in diversen Farben spritzlackiert waren, in einen Beladekorb gefüllt und während einer Einwirkdauer von 30 s in reines Triethylenglykol einer Temperatur von 260°C eingetaucht. Im Ergebnis wurde der Lackauftrag restlos entfernt, ohne dass Oberflächenbeschädigungen der metallischen Bauteile auftraten. Anschließend wurde der Versuch mit einer verringerten Temperatur des reinen Triethylenglykols (TEG) von 220°C wiederholt, wobei hier nach einer Einwirkdauer von 60 s ebenfalls eine restlose Lackentfernung beobachtet werden konnte.

### Versuchsbeispiel 2:

Es wurden Stichsägeblätter einer Länge von ca. 200 mm aus einem Bimetall mit einem einbrennlackierten weißen Aufdruck in der gleichen Weise wie im Versuchsbeispiel 1 während einer Einwirkdauer von 5 min in reines Triethylenglykol einer Temperatur von 270°C eingetaucht, wobei im Ergebnis eine vollständige Entlackung der Stichsägeblätter ohne Beeinträchtigung der Oberfläche derselben erreicht wurde.

### Versuchsbeispiel 3:

Es wurden als Rolladenpanzer ausgestaltete Aluminiumprofile einer Länge von ca. 400 mm, die aus einem in weißer Farbe pulverbeschichteten Aluminium hergestellt waren, während einer Einwirkdauer von 1 min in reines Triethylenglykol einer Temperatur von 270°C eingetaucht. Im Ergebnis wurde eine restlose Lackentfernung erreicht.

Nach Abschluss des Entlackungsprozesses wird der Beladekorb 2 mit den darin befindlichen und nun entlackten Bauteilen aus dem Reinigungskessel 1 herausgehoben und die jetzt lackfreien Teile können entnommen werden. Durch die infolge der Temperierung des Triethylenglykols auf eine Temperatur von 150 bis 300°C weisen auch die Bauteile eine entsprechend hohe Oberflächentemperatur auf und etwaig anhaftende Lösungsmittelreste verdampfen innerhalb kürzester Zeit, so dass die entlackten Teile in der Regel ohne weitere Nachbehandlung sauber und trocken sind und hierbei die Oberflächen weder angegriffen noch beschädigt werden.

Neben metallischen Bauteilen ist das vorangehend erläuterte Verfahren und die Vorrichtung auch zum Entlacken entsprechend temperaturfester duroplastischer Kunststoffe geeignet.

## Patentansprüche

1. Verfahren zum Entlacken von oberflächlich lackierten Bauteilen durch Benetzen der Bauteile mit einem Lösungsmittel auf Basis von Triethylenglykol über eine vorbestimmte Einwirkdauer, **dadurch gekennzeichnet, dass** das Lösungsmittel reines Triethylenglykol ist, welches auf eine Temperatur von 180 bis 295°C temperiert wird und das Lösungsmittel nach Abschluss des Entlackungsvorganges vollständig verdampft, so dass die Bauteile selbsttätig ohne Abwischen der Oberfläche abtrocknen.

2. Verfahren nach Anspruch 1, **dadurch gekennzeichnet, dass** die Einwirkdauer höchstens 5 min beträgt.

3. Verfahren nach Anspruch 1 oder 2, **dadurch gekennzeichnet, dass** die Bauteile über die Einwirkdauer in ein Bad des Lösungsmittels eingetaucht werden.

4. Verfahren nach Anspruch 3, **dadurch gekennzeichnet, dass** die Bauteile während der Einwirkdauer im Bad bewegt werden.

5. Verfahren nach Anspruch 1 oder 2, **dadurch gekennzeichnet, dass** die Bauteile mit dem Lösungsmittel besprüht werden.

6. Verfahren nach einem der Ansprüche 1 bis 5, **dadurch gekennzeichnet, dass** die Bauteile aus einem metallischen Werkstoff hergestellt sind.

## Claims

1. Method for removing coatings from superficially coated components by wetting the components with a solvent based on triethylene glycol over a predetermined action period, **characterised in that** the solvent is pure triethylene glycol, which is temperature-controlled to a temperature of 180 to 295°C and, on conclusion of the coating removal process, the solvent is completely evaporated so that the components automatically dry without the surface being wiped.

2. Method according to claim 1, **characterised in that** the action period is at most 5 minutes.

3. Method according to claim 1 or 2, **characterised in that** the components are immersed in a bath of the solvent over the action period.

4. Method according to claim in 3, **characterised in that** the components are moved in the bath during the action period.

5. Method according to claim 1 or 2, **characterised in that** the components are sprayed with the solvent.

6. Method according to any one of claims 1 to 5, **characterised in that** the components have been produced from a metallic material.

## Revendications

1. Procédé pour le décapage d'articles à surface peinte, par mouillage des articles avec un solvant à base de triéthylèneglycol pendant une durée d'imprégnation prédéfinie, **caractérisé en ce que** le solvant est du triéthylèneglycol pur qui est porté à une température de 180 à 295°C et le solvant s'est complètement évaporé à la fin de l'opération de décapage, si bien que les articles sèchent automatiquement sans essuyage de la surface.

2. Procédé selon la revendication 1, **caractérisé en ce que** la durée d'imprégnation est de 5 min maximum.

3. Procédé selon la revendication 1 ou 2, **caractérisé en ce que** les articles sont plongés dans un bain de solvant pendant la durée d'imprégnation.

4. Procédé selon la revendication 3, **caractérisé en ce que** les articles sont déplacés dans le bain pendant la durée d'imprégnation.

5. Procédé selon la revendication 1 ou 2, **caractérisé en ce que** les articles sont vaporisés de solvant.

6. Procédé selon l'une quelconque des revendications 1 à 5, **caractérisé en ce que** les articles sont fabriqués en un matériau métallique.
